# EUROPEAN PATENT APPLICATION

(11) **EP 1 970 873 A2**
(43) Date of publication of application: **17.09.2008**
(21) Application number: 08250843.3
(22) Date of filing: 12.03.2008
(51) Int. Cl.: G08C 17/00, G01L 3/10, G01K 1/02

(54) **Multi-transmitter telemetry system**

(30) Priority: 13.03.2007 US 717479
(71) Applicant: United Technologies Corporation, Hartford Connecticut 06101 (US)
(72) Inventor: Bires, Robert J., Glastonbury CT 06033 (US)
(74) Representative: Leckey, David Herbert

(57) **Abstract**

A multi-transmitter telemetry system (10) remotely controls and modifies the operating parameters associated with a plurality of addressable transmitter modules (50a-50N) connected to collect data from a plurality of sensors (52a-52d, 54a-54j). Control instructions remotely provided to each transmitter module (50a-50N) include addressing data identifying the transmitter module to implement the control instructions. Although each transmitter module (50a-50N) decodes the control instructions, only the addressed transmitter module (50a-50N) implements the provided instructions. In this way, individual transmitters employed in a multi-transmitter telemetry system (10) may be individually addressed and remotely controlled.

## Description

### BACKGROUND OF THE INVENTION

The present invention relates to telemetry, and more specifically to a multi-transmitter telemetry system for acquiring data from rotating components.

Telemetry systems are commonly used in testing applications to acquire and communicate data from sensors located on rotating components. Components of a telemetry system are located in both the rotating and stationary portions of an engine such as an internal combustion engine, a gas turbine engine or a rotating test rig. Typically, a telemetry package consisting of a transmitter module and associated sensors measures and communicates data from the rotating portion of the engine to the stationary portion. Collected data may include strain or temperature data.

Typical installation of a telemetry system requires configuration of components prior to engine installation. Once installed within an engine, the telemetry system is typically not easily reached without some level of disassembly of the engine. Therefore, modifications to an installed telemetry system typically require a significant amount of time and expertise to disassemble and then re-assemble the engine or rig.

### BRIEF SUMMARY OF THE INVENTION

In one aspect, a multi-transmitter telemetry system provides remote control and individual addressing of transmitter modules located on a rotating member. The multi-transmitter telemetry system includes means for digitally modulating an AC power carrier signal to encode transmitter specific command instructions that include addressing instructions and control instructions. Each transmitter module includes transmitter circuitry for receiving command instructions provided on the AC power carrier signal. In response to a decoded command instruction addressed to a particular transmitter module, the addressed transmitter module modifies operating parameters associated with the collection and transmission of data.

### BRIEF DESCRIPTION OF THE DRAWINGS

FIG. 1 is block diagram illustration of a multi-transmitter telemetry system.
FIG. 2 (divided into FIGS. 2A and 2B) is a block diagram illustration of components located within a transmitter of the multi-transmitter telemetry system.

### DETAILED DESCRIPTION

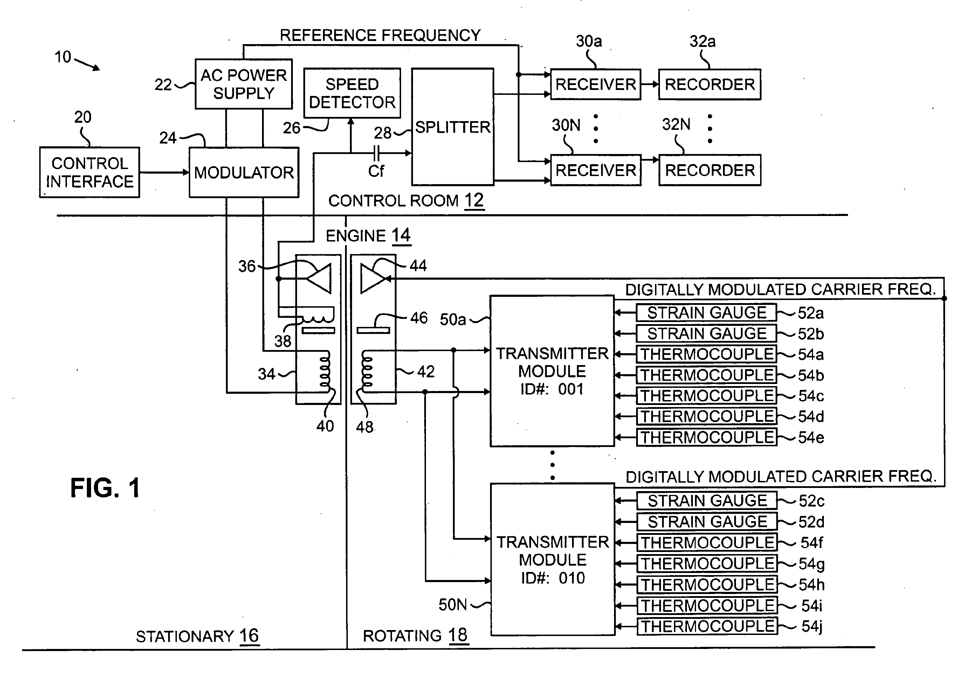

FIG. 1 is a block diagram illustration of multi-transmitter telemetry system 10 that provides remote control and individual addressing of transmitter modules, allowing a user to configure or re-configure telemetry system 10 by remotely communicating command signals or instructions to specific transmitter modules. The block diagram is organized to illustrate the physical relationships and orientations between components as well as electrical connectivity. For example, FIG. 1 is divided by the physical location of control room 12 and engine 14, wherein control room 12 and components included within control room 12 are located outside of engine 14. In addition, engine 14 is divided into stationary portion 16 and rotating portion 18. Data collected by components within rotating portion 18 is first communicated to stationary portion 16, before being communicated to control room 12.

Components located within control room 12 include control interface 20, alternating current (AC) power supply 22, modulator 24, speed detector 26, capacitor C_{f}, signal splitter 28, a plurality of receivers 30a-30N, and a number of recording devices 32a-32N. The notation used for the plurality of receivers 30a-30N and receiving devices 32a-32N should be interpreted to indicate that any number of receiving and recording devices may be employed.

Located within stationary portion 16 and connected to communicate with components within control room is communication package 34, which includes stationary antenna 36, magnetic pick-up 38, and stationary coil 40. Located within rotating portion 18 of engine 14 are the components commonly referred to as the "telemetry package" that collect data from sensors located in rotating portion 18 and communicate the collected data to stationary portion 16. The telemetry package includes rotating communication package 42, which includes rotating antenna 44, rotating magnet 46, and rotating coil 48, as well as a plurality of transmitter modules 50a-50N. The notation used for transmitter modules 50a-50N should be interpreted to indicate that any number of transmitter modules may be employed. For example, in one embodiment the telemetry package may include forty (40) or more individual transmitter modules.

In addition, each transmitter module 50a-50N is characterized by a unique identification number. For example, transmitter module 50a has been assigned transmitter identification number 001, while transmitter module 50N has been assigned transmitter ID number 010.

To operate telemetry system 10, AC power generated by AC power supply 22 is communicated from control room 12 to components located within engine 14, specifically, each transmitter module 50a-50N. In one embodiment, the frequency of the AC power supply is defined by a crystal oscillator (not shown) located in AC power supply 22. In this embodiment, the frequency defined by the crystal oscillator is used as a reference frequency in components throughout multi-transmitter telemetry system 10. For instance, a reference frequency generated by AC power supply 22 is provided to transmitter modules 50a-50N and receivers 30a-30N. As discussed in more detail below, a benefit of providing a single reference frequency from control room 12 to various components is the ability to quickly synchronize data transmission from transmitter modules 50a-50N to receivers 30a-30N.

Command signals used to remotely control the operation of transmitter modules 50a-50N are communicated to rotating portion 18 by digitally modulating (or embedding) the command signals within the AC power carrier signal. The unique identification numbers associated with each transmitter module allows control interface 20 to individually address and control transmitter modules 50a-50N. Therefore, command signals may include both an identification instruction indicating the transmitter module being addressed and control instructions for the addressed transmitter module to implement. For instance, the user may provide an instruction for transmitter module 50a (transmitter ID number 001) regarding the radio frequency at which transmitter module 50a is using to transmit data.

As shown in FIG. 1, modulator 24 embeds command signals received from control interface 20 onto the AC power carrier signal. In one embodiment, modulator 24 employs low frequency amplitude modulation to digitally embed the command instructions within the AC power signal. For instance, modulator 24 may modulate the AC power carrier signal with a 2-3 KHz sine wave that is amplitude modulated to digitally encode the command instructions. In this embodiment, each individual transmitter 50a-50N would include low-pass circuitry for isolating the 2-3 KHz frequency, as well as decoding circuitry for decoding the digital command signal.

The modulated AC power carrier signal generated by modulator 24 is provided to stationary coil 40, which is inductively coupled to rotating coil 48 such that power provided to stationary coil 40 is transmitted to rotating coil 48. As shown in FIG. 1, in order to efficiently transfer power from stationary coil 40 to rotating coil 48, the two coils must be located in somewhat close proximity to one another. Each transmitter module 50a-50N is connected to receive power from rotating coil 40. Transmitter modules 50a-50N use the power provided by rotating coil 40 to operate the plurality of sensors (including, for example, both strain gauge sensors and temperature sensors) connected to each transmitter module and to communicate the data provided by the sensors to rotating antenna 44.

Each transmitter module 50a-50N also includes circuitry that allows the transmitter modules to decode command instructions encoded within the AC power carrier signal. That is, each transmitter module 50a-50N decodes the command instructions provided within the AC power carrier signal, but only the transmitter module specifically addressed within the command instruction will respond to a particular instruction. For instance, if control interface 20 encodes a command signal for transmitter module 50a, the command signal will include the transmitter ID number 001 corresponding to transmitter module 50a. Even though all transmitter modules 50a-50N will receive the command signal embedded within the power carrier signal, only transmitter module 50a will respond to the decoded command signal. This allows each transmitter module 50a-50N within a telemetry package to be individually addressed and controlled. This feature provides great flexibility during an engine test and reduces the time spent testing and troubleshooting problems.

In addition to individual addressing of transmitter modules 50a-50N, command instructions may be addressed such that all transmitter modules 50a-50N respond to a single command instruction. Depending on the situation, it may be desirable to send a single command instruction that is implemented by each of the transmitter modules.

As shown in FIG. 1, each transmitter module 50a-50N is connected to a plurality of sensors. In this particular embodiment, each transmitter module 50a-50N is connected to a pair of high-bandwidth sensors and five DC-coupled low-bandwidth sensors. As shown in FIG. 1, the high-bandwidth sensors are strain gauge sensors (wherein transmitter module 50a is connected to strain gauges 52a and 52b and transmitter module 50N is connected to strain gauges 52c and 52d), although other types of high-bandwidth sensors may be employed in place of the strain gauge sensors. Similarly, the DC-coupled low-bandwidth sensors shown in FIG. 1 are thermocouple sensors (wherein transmitter module 50a is connected to thermocouples 54a-54e and transmitter module 50N is connected to thermocouples 54f-54j), although other types of DC coupled low-bandwidth sensors may be employed. One of the benefits of DC-coupled, low-bandwidth sensors is ability to monitor steady state values. For example, DC-coupled, low-bandwidth sensors may include temperature sensors as shown in FIG. 1, or static strain sensors for monitoring static stresses (as opposed to the high-bandwidth strain sensors discussed above for measuring dynamic stresses) within engine 14. In other embodiments, a different configuration of high bandwidth sensors and DC-coupled low-bandwidth sensors may be employed. Each transmitter module 50a-50N receives data from the plurality of sensors, and encodes the data onto a unique radio frequency carrier signal using digital modulation techniques. The digitally modulated radio frequency carrier signal is then provided to rotating antenna 44 for transmission to the stationary section 16 of engine 14 through stationary antenna 36.

By operating each transmitter module 50a-50N at a unique radio frequency, data provided by individual transmitter modules is kept distinct. One benefit of this configuration is if one transmitter module fails, data may still be recorded and transmitted by the remaining transmitter modules. In addition, the carrier frequency employed by each transmitter module may be remotely modified (via command instructions). For instance, a problem encountered in telemetry design and application is a phenomenon known as once per revolution drop-out, in which a particular frequency employed by a transmitter essentially fails to communicate at a particular circumferential location, resulting in signal loss once per revolution as rotating antenna 44 moves through that location. The radio frequencies that will cause this phenomenon are typically not known until after installation of the telemetry package. Multi-transmitter telemetry system 10 allows a transmitter module operating at a radio frequency that results in once per revolution drop-out to be controlled via the command signals provided by control interface 20 to operate at a new radio frequency that provides better performance. In contrast, prior art systems would require the engine to be disassembled to allow an operator to physically reach and re-configure the radio frequency used by a particular transmitter module or conduct the engine test with discontinuous or noisy data provided as a result of once per revolution drop-out. Disassembling the engine adds significant cost and time to an engines budget and test schedule.

Data received by stationary antenna 36 is then communicated to control room 12. In addition to data received from rotating antenna 44, magnetic pick-up 38 is configured to sense magnet 46. Data received at stationary antenna 36 and magnetic pick-up 38 is provided to control room 12. In one embodiment, data from stationary antenna 36 and magnetic pick-up 38 is bundled together and provided on a signal coaxial line to control room 12.

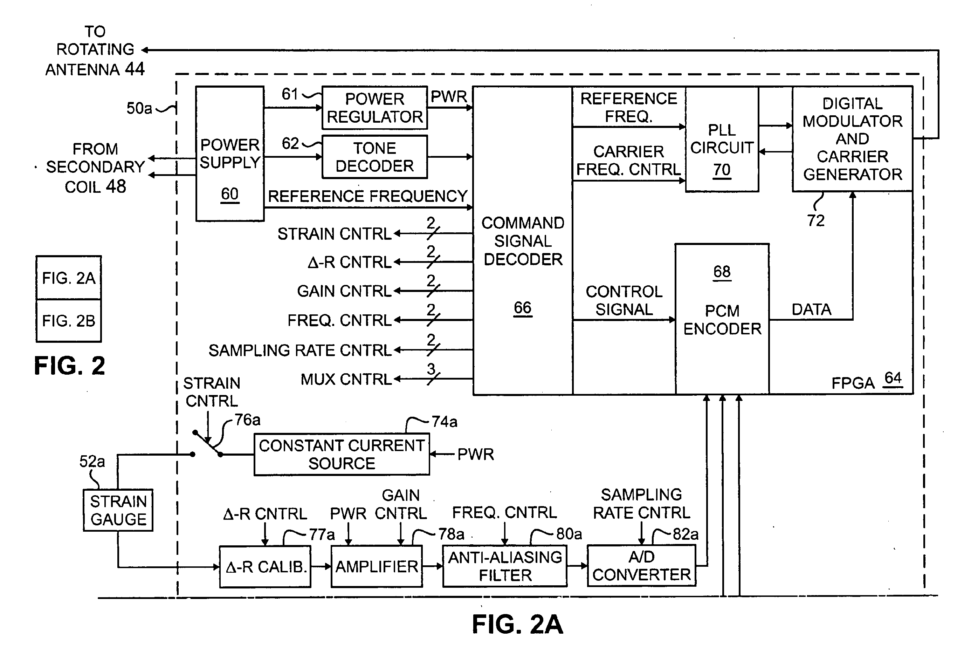

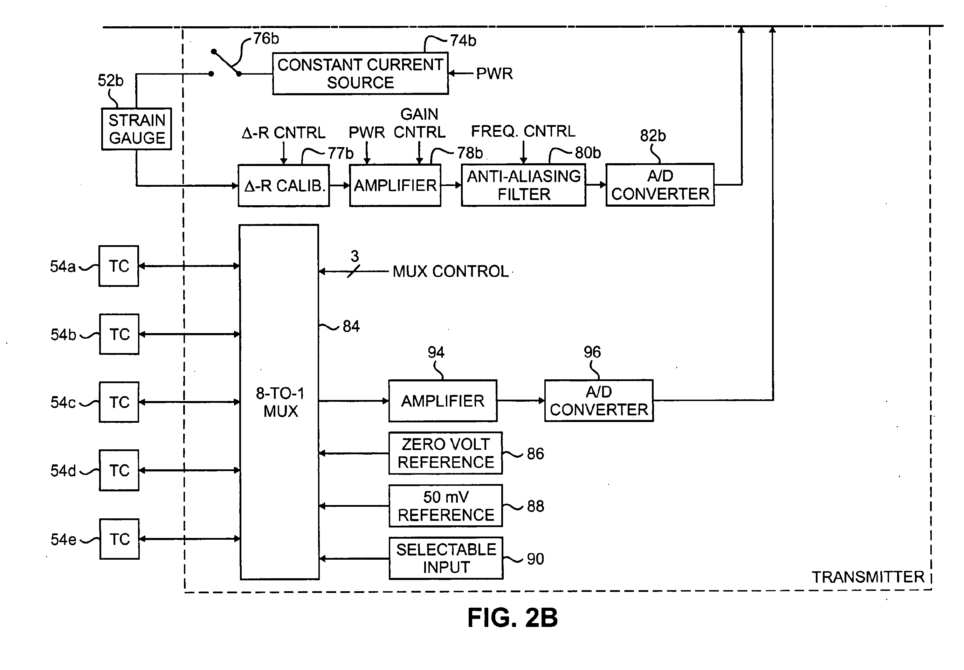

Control room 12 receives and analyzes the data provided by the telemetry package. Speed detector 26 is configured to detect pulses provided by magnetic pick-up 38. In this way, speed detector 26 is able to determine the speed, or revolutions per second, of rotating portion 18. In addition, data communicated by radio frequency from rotating antenna 44 to stationary antenna 36 is filtered through capacitor C_{f} and provided to splitter 28. Capacitor C_{f} filters low frequency signals and noise from the data provided by the telemetry package, including the pulses provided by magnetic pick-up 38. The filtered signal is provided to splitter 28, which essentially divides the signal into a plurality of signals that can be individually analyzed by receivers 30a-30N. As discussed below with respect to FIG. 2, each transmitter module 50a-50N bundles or integrates data provided by the plurality of connected sensors into a single bistream that is modulated onto the carrier radio frequency. Each receiver 30a-30N extrapolates data provided by one of the plurality of transmitter modules 50a-50N such that data provided by individual sensors connected to a particular transmitter module is identified within the bitstream of data. That is, receiver 30a may be initialized to decode data modulated onto a carrier frequency employed by transmitter module 50a. Likewise, receiver 30b may be initialized to decode data modulated onto a carrier frequency employed by transmitter module 50b, and so on. Data demodulated by receivers 30a-30N is provided to recorders 32a-32N, respectively, which store the data provided by each of the sensors connected to transmitter modules 50a-50N.

In one embodiment, each receiver 30a-30N receives as an input a reference frequency provided by the crystal oscillator located in AC power supply 22. This reference frequency is also supplied to transmitter modules 50a-50N via the frequency of the AC power provided to the transmitters. One of the benefits of providing a stable reference frequency to both transmitter modules 50a-50N and receivers 30a-30N, is that the reference frequency can be used to synchronize data transmitted by transmitter modules 50a-50N to data received by receivers 30a-30N. This type of synchronous detection of a digitally modulated carrier frequency provides more reliable demodulation and quick synchronization to encoded data received by receivers 30a-30N.

FIG. 2 (divided into FIGS 2A and 2B) is a block diagram illustrating the operation of transmitter module 50a, which is representative of the operation of each transmitter module 50a-50N. One aspect of the configuration of transmitter module 50a (as well as transmitter modules 50a-50N) is the ability of each transmitter module to operate independent of other transmitter modules in the system. That is, transmitter module 50a is able to function independent of whether other transmitter modules are functioning properly.

In addition, FIG. 2 illustrates how command signals embedded within a power carrier signal are extrapolated and implemented by each transmitter module, such that transmitter module 50a is able to individually control the operation of circuitry used to collect data from sensors (such as strain gauge sensors 52a and 52b and temperature sensors 54a-54e). Components located within each transmitter module include power supply 60, power regulator 61, tone decoder 62, and field programmable gate array (FPGA) 64, which includes command signal decoder 66, pulse coded modulation (PCM) encoder 68, phased lock loop (PLL) circuit 70, and digital modulator and carrier frequency generator 72. In addition, FPGA is connected to a variety of analog circuits, such as constant current source circuits 74a and 74b, strain control switches 76a and 76b, Δ-R calibration circuits 77a and 77b, amplifier circuits 78a and 78b, anti-aliasing filter circuits 80a and 80b, analog to digital (A/D) converter circuits 82a and 82b, 8-to-1 multiplexer (mux) circuit 84, amplifier circuit 94, and A/D converter 96.

Alternating current (AC) power received by secondary coil 48 (shown in FIG. 1) is provided to power supply circuit 60. Power supply circuit 60 rectifies the AC voltage of the power carrier signal to a direct current (DC) voltage. Rectified voltage provided by power supply circuit 60 is provided to power regulator 61 and tone decoder 62. Power regulator 61 regulates the rectified voltage provided by power supply circuit 60 to a desired DC magnitude and removes any remaining remnants of the AC signals from the rectified voltage. The DC voltage (labeled PWR) provided by power regulator 61 is provided to components throughout transmitter module 50. In one embodiment, several power regulators are employed to generate DC voltages of varying magnitudes depending on the power requirements of components within transmitter module 50a.

In addition, raw rectified voltage provided by power supply 60 is provided to tone decoder 62, which is able to detect low frequency modulations in the rectified power carrier signal. In one embodiment, tone decoder 62 may include a low-pass or band-pass filter that allows tone decoder 62 to detect whether low frequency modulations indicative of embedded command instructions are present within the AC power signal provided by control room 12. If an embedded command signal is detected, tone decoder 62 provides notification to command signal decoder 66, instructing command signal decoder 66 to decode and respond to the embedded command signal.

Power supply 60 also derives a reference frequency signal from the AC power signal and provides the reference frequency signal to FPGA 64. The reference frequency signal is used by FPGA 64 to generate radio carrier frequencies used by transmitter module 50a as well as to generate other timing signal used throughout transmitter module 50a. As discussed with respect to FIG. 1, the reference frequency is generated by a crystal oscillator- (or other suitable frequency generator) located in control room 12, and provided to receivers 30a-30N and transmitter modules 50a-50N via the AC power signal to allow for synchronous detection of data transmitter from transmitter modules 50a-50N to receivers 30a-30N. The use of reference frequency by transmitter module 50a is discussed in more detail with respect to the generation of the carrier frequency signal.

FPGA 64 operates as the central controller of each transmitter module 50a-50N. In the embodiment shown in FIG. 2, a block diagram of a few of the functions performed by FPGA 64 are illustrated, such as command signal decoder 66, PCM encoder 68, PLL circuit 70, and digital modulator and carrier generator 72. These functions, as well as additional functions, may be implemented in a variety of ways on FPGA 64 or any other suitable microprocessor device.

In particular, command signal decoder 66 implemented on FPGA 64 decodes the command signal embedded within the power carrier signal and provides control signals to various components within transmitter module 50a based on the decoded command signals. As part of the decoding process, command signal decoder determines whether the command instructions provided by control room 12 are intended for transmitter module 50a. To this end, command signal decoder 66 compares a portion of the decoded command signal to the transmitter module's identification number. In one embodiment, the identification number is stored on local memory within FPGA 64. In another embodiment, the identification number for each transmitter module is hardwired within transmitter module 50a. By uniquely identifying each transmitter module 50a-50N, command signal decoder 66 will only implement those command instructions intended for transmitter module 50a.

Assuming transmitter module 50a is the intended recipient of the decoded command signal instructions, then command signal decoder 66 generates control instructions that are provided to various components within transmitter module 50a. In the embodiment shown in FIG. 2A, control instructions include strain gauge excitation on/off control (strain cntrl), delta-R calibration control (Δ-R cntrl), amplifier gain control (gain cntrl), anti-aliasing filter frequency control (freq. cntrl), analog-to-digital converter sampling rate control (sampling rate cntrl), and multiplexer control (mux cntrl). Each control instruction modifies the performance of components used to measure and process sensed data. In addition, the control instructions are addressed to individual analog circuits, allowing transmitter module 50a to independently control the operation of strain gauge 52a and 52b. For example, transmitter module 50a generates control signals unique to strain gauge circuitry connected to strain gauge 52a and control signal unique to strain gauge circuitry connected to strain gauge 52b. In addition, command signal instructions may include instructions regarding the carrier frequency to be generated by digital modulator and carrier frequency generator 72, as well as operational instructions for PCM encoder 68.

In the embodiment shown in FIG. 2, transmitter module 50a is connected to receive input from two strain gauges (52a and 52b) and five thermocouple devices (54a-54e). Constant current sources 74a and 74b (or an alternative power supply) are connected to provide power to strain gauges 52a and 52b, respectively. Strain control switches 76a and 76b are connected between constant current sources 74a and 74b and strain gauges 52a and 52b, respectively. The position of strain control switches 76a and 76b are controlled by strain on/off control instructions (separate instructions for each strain control switch) provided by FPGA 64. This allows power to be selectively provided to strain gauges 52a and 52b such that excitation provided to strain gauges 52a and 52b can be selectively controlled to be 'on' or 'off'.

A benefit of the ability to selectively provide and remove power to strain gauges 52a and 52b is the ability to detect and quantify electrical noise superimposed on the signal provided by strain gauges 52a and 52b. For instance, wires connecting strain gauges 52a and 52b to transmitter module 50a may generate magnetically induced noise that distorts the signal provided by the strain gauges. By selectively turning the excitation to strain gauge 52a or 52b 'off', the amount of magnetically induced noise generated by the wires (or other sources) may be measured and quantified. Following a determination of the amount of inherent noise generated in the signal provided by strain gauges 52a and 52b, subsequent data provided by strain gauges 52a and 52b may be compensated based on the prior measurement of inherent noise, such that the accuracy of the data provided by strain gauges 52a and 52b is improved.

As shown in FIG. 2, each strain gauge 52a and 52b is connected to Δ-R calibration circuits 77a and 77b, respectively. Δ-R calibration circuits 77a and 77b include various known resistance values that can be selectively connected to strain gauge sensors 52a and 52b respectively. By selectively varying the resistance provided in series with strain gauge 52a and 52b by a known amount, the performance of each strain gauge can be determined. In one embodiment, to test and calibrate strain gauge sensor 52a, Δ-R control signals provided by command signal decoder 66 causes a switch to alternately connect a first, relatively large resistance (e.g., 5000 Ω) in parallel with a second, relatively small resistance (e.g., 50 Ω) at a set frequency (e..g, 1 KHz) to generate a small peak-to-peak change in resistance. Based on the resulting response, control room 12 is able to calibrate strain gauge 52a or otherwise determine whether strain gauge 52a is electrically 'open' such that strain gauge 52a is no longer providing valid strain gauge data. In addition, Δ-R calibration may be used to ensure that the data recorded with respect to a particular strain gauge sensor, such as strain gauge sensor 52a, is in fact being generated by the strain gauge sensor 52a and not strain gauge sensor 52b. During normal operation, in which Δ-R calibration is not performed, only the small resistor (i.e., 50Ω) remains connected in series with strain gauge 52a.

Strain data measured by strain gauges 52a and 52b (and provided to Δ-R calibration circuits 77a and 77b) are provided to amplifier circuits 78a and 78b, respectively, which provide a select amount of amplification or gain to the signal provided by strain gauges 52a and 52b. Each amplifier circuit 78a and 78b receives control instructions (gain control) from command signal decoder 66 that determines the amount of gain to be provided to the signal provided by strain gauges 52a and 52b, respectively. The ability to dynamically control the gain allows the amplified strain gauge signal to be tuned within the dynamic range associated with each A/D converter 82a and 82b. For instance, if the signal provided by strain gauges 52a and 52b is too small, then A/D converters 82a and 82b may introduce quantizing errors when converting the analog signal to a digital signal. Conversely, if the signal provided by strain gauges 52a and 52b and the amplification of the signal by amplifiers 78a and 78b becomes too large, then A/D converters 82a and 82b, respectively, will be unable to convert the analog signal to a digital representation. Selectively controlling the amplification provided by amplifiers 78a and 78b (i.e., gain provided by each amplifier 78a and 78b may be independently controlled) allows the signal provided to A/D converters 82a and 82b to be controlled within a range that results in accurate digital representation of the analog signal.

The amplified signals generated by amplifiers 78a and 78b are provided to anti-aliasing filters 80a and 80b, respectively. Anti-aliasing filters 80a and 80b act to remove frequencies located above the Nyquist criteria, which if unfiltered would cause distortion or aliasing of the converted digital signal. The Nyquist criterion is determined based on the sampling rate of A/D converters 82a and 82b. Each anti-aliasing filter 80a and 80b is connected to receive control instructions (filter frequency cntrl) from FPGA 64 that determines the filter frequency to be provided by each anti-aliasing filter. The filter frequency of each anti-aliasing filter may be individually adjusted as required to prevent aliasing or distortion of the converted digital signal.

In addition, the filter frequency associated with an anti-aliasing filter may be adjusted in order to take advantage of additional bandwidth if data is provided by only a single strain gauge. For example, if strain gauges 52a and 52b are both providing data, such that strain gauges 52a and 52b are sharing the available transmitter module bandwidth, then the sampling rate of A/D converters 82a and 82b will be constrained by the available transmitter module bandwidth. The filter frequency control instructions provided to anti-aliasing filters 80a and 80b reflect the shared bandwidth and corresponding Nyquist criteria. If strain gauge 52b is turned 'off' or data provided by strain gauge 52b is no longer sampled, then the bandwidth available to strain gauge 52a will increase. In order to take advantage of the increased bandwidth, the frequency of anti-aliasing filter 80a is increased (i.e., higher frequencies are allowed to pass through the filter).

The filtered signals provided by anti-aliasing filters 80a and 80b are then provided to A/D converters 82a and 82b, respectively, which convert the analog signals to a digital signal that can be provided to FPGA 64. Command signal decoder provides a control signal (sampling rate cntrl) to each A/D converter 82a and 82b to control the sampling rate employed by each A/D converter. The sampling rate of A/D converter 82a and 82b defines the bandwidth allocation provided to each strain gauge sensor 52a and 52b. By increasing the sampling rate of A/D converter 82a, the bandwidth allocated to data provided by strain gauge sensor 52a is increased. Likewise, increasing the sampling rate of A/D converter 82b increases the bandwidth allocation to strain gauge 52b.

Therefore, based on remote control instructions received from control room 12, transmitter module 50a (as well as other transmitter modules) are able to dynamically modify the collection of data from strain gauges 52a and 52b. In particular, control instructions provided to analog circuitry connected to strain gauge 52a and 52b allows data collection with respect to each strain gauge to be uniquely and individually controlled. Analog circuitry used to measure and collect strain data can be modified to allocate bandwidth between one or more strain gauges and to dynamically control the provided gain. The benefit of dynamic allocation of bandwidth between strain gauges is the ability to adapt strain gauge performance based on the application or desired data. In some situations, data from each strain gauge may be required in order to provide a broad view of strains and stresses within an engine. This is most useful during initial engine startup, when only analytical data exists and actual levels of strain are not yet known. Conversely, in some situations, more detailed data from a single strain gauge may be required in order to provide additional detail regarding stresses and strains at a particular location within the engine. This is most useful in a critical area of the engine, where very high predicted or historical strains are known to exist. The ability to dynamically alter the data provided by a particular transmitter module during a testing operation allows for more robust collection of data.

In addition, transmitter module 50a is connected to receive data from a number of temperature sensors. In this embodiment, thermocouples are employed to provide temperature data, but any suitable temperature sensor may be employed. In the embodiment shown in FIG. 2, transmitter module 50a is connected to receive data from five separate thermocouple sensors 54a, 54b, 54c, 54d, and 54e (collectively, 54a-54e). Each thermocouple is connected to provide an input representative of sensed temperature to an input of 8-to-1 multiplexer 84. Command signal decoder 66 provides control instructions (mux cntrl) to 8-to-1 multiplexer 84 to select one of the eight available channels of multiplexer 84. By selecting a channel, data provided on the selected channel is provided through amplifier 94 and A/D converter 96, which converts the analog signal provided by 8-to-1 mux 84 to a digital signal that can be provided to PCM encoder 68.

The configuration of inputs provided to 8-to-1 multiplexer 84 may be tailored based on the particular application. FIG. 2B shows an embodiment in which five of the available eight inputs are connected to thermocouple sensors 54a-54e. Two of the remaining eight inputs are connected to reference voltages, including a zero volt reference voltage 88 and a 50mV reference voltage 90. The zero volt reference voltage 88 and 50 mV reference voltage 90 provide a means for detecting changes in the amplification or gain of amplifier 94 and effects such as DC drift in A/D converter 96. That is, by communicating a known value of zero volts and a known value of 50 mV (for this reason, the 50 mV signal must be very stable), errors introduced into the signal by amplifier 94 and A/D converter 96 may be detected and quantified. Based on detection of errors introduced by amplifier 94 and A/D converter 96, control room 12 can account for errors in data provided by 8-to-1 mux 84.

The remaining input provided to 8-to-1 multiplexer is a floating input or selectable input that may be configured in one of several ways. For instance, in one embodiment the remaining input is connected to an additional temperature sensor that monitors the temperature at the cold junction of at least one of the thermocouple sensors, such as thermocouple 54a. Because thermocouples measure the relative temperature difference between two locations, precise measurement of the temperature at the cold junction of the thermocouple is beneficial in correctly analyzing data provided by thermocouples 54a-54e.

In another embodiment, a temperature sensor may be connected to monitor temperature within transmitter module 50a. A benefit of monitoring temperature within transmitter module 50a is the ability to ensure circuitry within the transmitter module is not operated above suggested operating temperatures.

In another embodiment, the rectified voltage provided by power supply 60 is provided as an input to 8-to-1 mux 84. This allows control room 12 to monitor the amount of power being provided to rotating coil 48, and thus to each individual transmitter. During engine testing operations, the axial alignment between stationary coil 40 and rotating coil 48 is altered as the engine speed increases. Specifically, misalignment between stationary coil 40 and rotating coil 48 or an increase in distance between the two coils will decrease the power conversion efficiency between the two coils. By monitoring the rectified voltage provided by power supply 60, decreases (or increases) in power provided to transmitter modules 50a-50N may be detected and remedied by selectively increasing (or decreasing) the power provided to stationary coil 40.

In another embodiment of multi-transmitter telemetry system 10, some of the transmitter modules 50a-50N may be equipped to monitor cold junction temperatures, others may be equipped to monitor internal temperatures within a corresponding transmitter module, and others may be used to monitor the supply voltage provided to the corresponding transmitter module. Thus, relevant (but not redundant) data may be collected throughout the telemetry package.

As shown in FIG. 2, command signal decoder 66 provides a three-bit multiplexer control signal to multiplexer 84, wherein the multiplexer control signal selects which of the eight connected channels should be provided as input to PCM encoder 68, along with data provided by strain gauges 52a and 52b. In one embodiment, command signal decoder 66 may cycle through each input of multiplexer 84 in turn, providing a cycle of data to PCM encoder 68 representing data provided by the associated sensors. In other embodiments, command signal decoder may select only one input from 8-to-1 multiplexer 84 to provide more detailed data from a single sensor.

Each channel of data selected by multiplexer 84 is provided to amplifier circuit 94, and then to A/D converter 96. The digital signal generated by A/D converter 96 is provided to PCM encoder 68, along with digital data provided with respect to strain gauge sensors 52a and 52b. Additional circuitry, such as a store and hold circuit, may also be used in conjunction with A/D converter 96 to collect data from the plurality of sensors providing data to multiplexer 84.

In this embodiment, data provided to FPGA 64 includes two channels of strain data and one channel of data provided by 8-to-1 multiplexer 84. PCM encoder 68 bundles the data into a single bitstream (labeled "Data") that is provided to digital modulator 72 for conversion to a digital signal that can be embedded onto a carrier frequency. As discussed above, each transmitter module modulates data onto a unique carrier frequency or channel. The channel or frequency employed by digital modulator 72 may be selectively controlled or adjusted based on command instructions received and decoded by command signal decoder 66. That is, the carrier frequency employed by each transmitter module may be individually and selectively controlled based on command instructions provided by control room 12. In the embodiment shown in FIG. 2A, phase locked loop (PLL) circuit 70 receives a control instruction from command signal decoder that selects the desired carrier frequency and a reference frequency provided by the crystal oscillator located in control room 12. PLL circuit 70 is a closed loop feedback control system that compares the carrier frequency signal (provided as feedback from digital modulator 72) to a reference frequency (provided via the AC power signal), and provides as output a signal that is used by digital modulator and carrier generator 72 to selectively control the frequency of the radio frequency carrier signal. In addition, the frequency of the carrier signal generated by PLL circuit 70 in conjunction with digital modulator and carrier generator 72 can be selectively modified based on control signals (carrier freq. cntrl) provided by command signal decoder 66 to PLL circuit 70. In this way, the frequency of the radio frequency carrier signal employed by transmitter module 50a may be selectively controlled based on command signals received from control room 12.

Based on these inputs, as well as feedback received from digital modulator carrier generator 72 regarding the frequency of the carrier signal, PLL circuit 70 generates a control signal that reflects the desired frequency of the carrier signal. The control signal is provided to digital modulator and carrier generator 72, which uses the control signal to generate the carrier signal at the desired frequency. The reference frequency provided by command signal decoder 66, and derived from the crystal oscillator located in control room 12, allows the carrier frequency to be synchronized to the reference frequency.

In addition, one of the benefits of selective control of the frequency employed by each transmitter module 50a-50N is the ability to individually cause transmitter modules 50a-50N to cease transmitting a radio frequency signal. That is, based on command instructions received from control room 12, each transmitter module may be controlled to selectively turn 'off' the generation and transmission of a radio frequency carrier signal. This may be beneficial if a particular transmitter module has begun malfunctioning during a test operation or to prevent a transmitter module operating at a particular frequency from interfering with other nearby equipment.

Digital modulator 72 uses digital modulation methods to encode data received from the strain gauges and temperature sensors onto the radio carrier signal (at a frequency determined by the command instructions) that is provided to rotating antenna 44 (shown in FIG. 1). In one embodiment, digital modulator 72 makes use of Offset Quadrature Phase Shift Keying (OQPSK) digital modulation to encode bitstream data provided by PCM encoder 68 onto the radio carrier signal. One benefit of employing OQPSK digital modulation is this digital modulation technique is relatively insensitive to changes in amplitude (i.e., amplitude insensitivity). In other embodiments, digital modulator 72 may make use of any number of digital modulation techniques to encode bitstream data provided by PCM encoder 68 onto the radio carrier signal. The radio carrier signal would then be provided (as shown in FIG. 1) to rotating antenna 44 that would transmit the modulated radio carrier signal to stationary antenna 36.

Therefore, the present disclosure describes a multi-transmitter digital telemetry system that includes a plurality of individually addressable, and remotely configurable transmitter modules for collecting and transmitting data. Although the present invention has been described with reference to preferred embodiments, workers skilled in the art will recognize that changes may be made in form and detail without departing from the scope of the invention.

## Claims

1. A multi-transmitter telemetry system (10) for collecting data from a plurality of sensors (52a-52d, 54a-54j) located on a rotating member, the multi-transmitter telemetry system (10) comprising:
a control room modulator (24) that encodes transmitter specific command instructions that include addressing instructions and control instructions onto an AC power carrier signal;
a plurality of uniquely addressable transmitter modules (50a-50N) located on the rotating member, each transmitter module (50a-50N) having transmitter circuitry for receiving data from one of the plurality of sensors (52a-52d, 54a-54j) and transmitting the received data by modulating the received data onto a unique radio carrier signal;
wherein each transmitter module (50a-50N) includes decoding circuitry for decoding the command instructions encoded within the AC power carrier signal and comparing the addressing instructions to a stored address that uniquely identifies each transmitter module to determine whether to modify operating parameters associated with the transmitter circuitry based on the decoded control instructions; and
control room circuitry that receives and decodes data transmitted by each of the plurality of uniquely addressable transmitter modules (50a-50N) the plurality of unique radio carrier signal frequencies.

2. The multi-transmitter telemetry system (10) of claim 1, wherein the plurality of sensors (52a-52d, 54a-54j) providing data to each transmitter module includes both high-bandwidth sensors and low-bandwidth sensors.

3. The multi-transmitter telemetry system (10) of claim 1 or 2, wherein the transmitter circuitry includes:
a first strain gauge circuit connected to receive control instructions from the transmitter module and to provide strain data measured by a first strain gauge sensor (52a) to the transmitter module on a first channel;
a second strain gauge circuit connected to receive control instructions from the transmitter module and to provide strain data measured by a second strain gauge sensor (52b) to the transmitter module on a second channel; and
wherein the control instructions provided to the first strain gauge circuit and the second strain gauge circuit selectively determine whether the strain data is provided to the transmitter module on the first channel only, the second channel only, or both the first and second channels simultaneously.

4. The multi-transmitter telemetry system (10) of claim 1, 2 or 3, wherein a strain gauge circuit includes:
a constant current source (74a; 74b) that provides power to a strain gauge (52a; 52b), wherein the control instructions include an on/off instruction that determines whether excitation is provided by the constant current source (74a; 78b) to the strain gauge (52a; 52b);
an amplifier (78a; 78b) that provides amplification to a signal provided by the strain gauge (52a; 52b), wherein the control instructions include a gain selection instruction that determines the gain provided by the amplifier (78a; 78b);
an anti-aliasing filter (80a; 80b) that provides anti-aliasing filtering to the amplified signal, wherein the control instructions include a filter frequency instruction that determines the filter frequency of the anti-aliasing filter (80a; 80b); and
an analog-to-digital converter (82a; 82b) that converts an analog signal provided by the anti-aliasing filter (80a; 80b) to a digital signal that is provided to the transmitter module (50a-50N), wherein the control instructions include a sampling rate control instruction that determines the sampling rate of the analog-to-digital converter (82a; 82b).

5. The multi-transmitter telemetry system (10) of claim 3 or 4, further including:
a delta-R calibration circuit (77a; 77b) connected to the strain gauge sensor (52a; 52b), wherein the control instructions include a delta-R calibration instruction that selectively inserts a known change in resistance in series with the strain gauge sensor (52a; 52b).

6. The multi-transmitter telemetry system (10) of any preceding claim, wherein each of the plurality of transmitter modules (50a-50N) includes:
a transmitter carrier generator (72) for generating the radio carrier signal;
and a transmitter digital modulator (72) that modulates data provided by the plurality of sensors (52a-52d, 54a-54j) onto the radio carrier signal, wherein a frequency of the radio carrier signal employed by each of the plurality of transmitter modules (50a-50N) may be selectively controlled by the transmitter module (50a-50N) based on the decoded control instructions.

7. The multi-transmitter telemetry system (10) of claim 6, wherein each of the plurality of transmitter modules (50a-50N) further includes:
a phase-locked loop (PLL) circuit (70) that selectively controls the frequency of the radio carrier signal generated by the transmitter carrier generator (72) based on decoded control instructions, a reference frequency provided as part of the AC power carrier signal, and feedback provided by the transmitter carrier generator (72).

8. The multi-transmitter telemetry system (10) of claim 6 or 7, wherein the transmitter digital modulator included with each of the transmitter modules employs an offset quadrature phase shift keying digital modulation.

9. The multi-transmitter telemetry system (10) of any preceding claim, wherein the radio carrier signal generated by each transmitter module (50a-50N) may be selectively turned 'on' or 'off' based on the decoded control instructions.

10. The multi-transmitter telemetry system (10) of any preceding claim, further including:
a magnet (46) located on the rotating member;
a magnetic pick-up sensor (38) located on a stationary member, wherein the magnetic pick-up sensor (38) provides a pulse responsive to the magnet (46); and
a receiver (26) that determines the speed of the rotating member based on the pulses provided by the magnetic pick-up sensor (38).

11. A transmitter module (50a-50N) for use in a digital telemetry system (10), the transmitter module (50a-50N) comprising:
a storage medium for storing an unique address associated with the transmitter module (50a-50N);
a power supply (60) that rectifies alternating current (AC) power received from an external source and generates direct current (DC) power output;
a tone decoder (62) for detecting the presence of command instructions digitally modulated onto the AC power;
a command signal decoder (66) that decodes command instructions embedded within the AC power and compares addressing information provided as part of the decoded command instructions to the unique address provided by the storage medium, wherein if the decoded command instruction corresponds with the unique address provided by the storage medium then command signal decoder (66) generates control instructions based on the decoded command instructions.;
sensing circuitry for receiving data from a sensor (52a-52d, 54a-54j) and configurable based on control instructions provided by the command signal decoder (66);
a PCM encoder (68) that generates a data bitstream in response to data received from the sensing circuitry;
a carrier generator (72) for generating a radio frequency carrier signal; and
a digital modulator (72) that modulates the data bitstream received from the PCM encoder (68) onto the radio frequency carrier signal at a frequency that is configurable by the control instructions.

12. The transmitter module (50a-50N) of claim 11, wherein the sensing circuitry includes:
a first analog strain gauge sensing circuitry connected to provide a first channel of strain control data to the PCM encoder (68) from a first strain gauge sensor (52a);
a second analog strain gauge sensing circuitry connected to provide a second channel of strain control data to the PCM encoder (68) from a second strain gauge sensor (52b); and
wherein the command signal decoder (66) communicates the control instructions to the first and second analog strain gauge sensing circuitry to selectively and individually control operating parameters associated with both the first and second analog strain gauge sensing circuitry.

13. The transmitter module (50a-50N) of claim 12, wherein the operating parameters associated with the first and second analog strain gauge sensing circuitry include bandwidth allocation between the first strain gauge sensor (52a) and the second strain gauge sensor (52b).

14. The transmitter module (50a-50N) of claim 12 or 13, wherein the strain gauge sensing circuitry includes:
a switch (76a; 76b) positioned between a power supply (74a; 74b) and the strain gauge sensor (52a; 52b) that in response to a on/off control instruction received from the command signal decoder (66) provides excitation to the strain gauge sensor (52a; 52b).

15. The transmitter module (50a-50N) of claim 12, 13 or 14, wherein the strain gauge sensing circuitry includes:
a delta-R calibration circuit (77a; 77b) that in response to a delta-R control instruction received from the command signal decoder (66) alternately provides a known change in resistance in series with the strain gauge (52a; 52b).

16. The transmitter module (50a-50N) of any of claims 12 to 15, wherein the strain gauge sensing circuitry includes:
an amplifier circuit (78a; 78b) connected to receive an analog signal generated by the strain gauge sensor (52a; 52b), wherein in response to a gain control instruction received from the command signal decoder (66) the amplifier circuit (78a; 78b) provides a selected amount of amplification to the analog signal.

17. The transmitter module (50a-50N) of any of claims 12 to 16, wherein the strain gauge sensing circuitry include:
an anti-aliasing filter (80a; 80b) that receives an analog signal generated by the strain gauge sensor (52a; 52b), wherein in response to a filter frequency control instruction received from the command signal decoder (66) the anti-aliasing filter (80a; 80b) selectively filters the analog signal.

18. The transmitter module (50a-50N) of any of claims 12 to 17, wherein both the first and second strain gauge sensing circuitry include:
an analog-to-digital converter (82a; 82b) that converts an analog signal generated by the strain gauge sensor (52a; 52b) to a digital signal that is provided to the PCM encoder (68), wherein in response to a sampling rate control instruction received from the command signal decoder (66) the analog-to-digital converter (82a; 82b) operates at a selected sampling rate.

19. The transmitter module (50a-50N) of any of claims 11 to 18, wherein the sensing circuitry includes:
a multiplexer (84) that is connected to receive input from a plurality of low-bandwidth direct current (DC) sources (54a-54e) and provide input from one of the plurality of low-bandwidth DC sources (54a-54e) to the PCM encoder (68) in response to input selection instructions received from the command signal decoder (66).

20. The transmitter module (50a-50N) of claim 19, wherein the plurality of inputs received by the multiplexer (84) includes:
temperature data provided by a temperature sensor (54a-54e) located within the transmitter module (50a-50N).

21. The transmitter module (50a-50N) of claim 19 or 20, wherein the plurality of inputs received by the multiplexer (84) includes:
power transmission data provided by a sensor connected to monitor power received by the transmitter module (50a-50N) from the external source.

22. The transmitter module (50a-50N) of any of claims 11 to 21, further including:
a phase locked loop (PLL) circuit (70) that selectively controls the frequency of the radio frequency carrier signal that is generated by the carrier generator (72) based on a reference frequency derived from the external source and a frequency control instruction provided by the control instructions.

23. A method for operating a transmitter module (50a-50N) in a multi-transmitter telemetry system (10), the method comprising:
receiving an AC power signal from a source external to the transmitter module (50a-50N);
decoding a command signal embedded within the AC power signal,
wherein the command signal includes addressing data and control instructions;
comparing the addressing data provided by the command signal to a stored address that uniquely identifies the transmitter module (50a-50N) to determine whether the command instruction is addressed to the transmitter module (50a-50N);
modifying operating parameters associated with the transmitter circuitry based on the control instructions and the outcome of the comparison between the addressing data and the stored address;
receiving sensor data provided by a sensor (52a-52d, 54a-54j);
embedding the received sensor data onto a radio frequency carrier signal;
and
transmitting the radio frequency carrier signal with embedded sensor data to a receiver external to the transmitter module (50a-50N);

24. The method of claim 23, wherein modifying operating parameters associated with the transmitter circuitry includes:
modifying the frequency of the radio frequency carrier signal based on the decoded control instructions.

25. The method of claim 23 or 24, wherein modifying operating parameters associated with the transmitter circuitry includes:
selectively generating the radio frequency carrier signal based on the decoded control instructions.

26. The method of claim 23, 24 or 25, wherein modifying operating parameters associated with the transmitter circuitry includes:
modifying sensor circuitry in response to the decoded control instructions to select which of a plurality of sensors (52a-52d, 54a-54j) will provide sensor data to the sensor circuitry.

27. The method of any of claims 23 to 26, wherein modifying operating parameters associated with the transmitter circuitry includes:
modifying sensor circuitry in response to the decoded control instructions to provide a select amount of gain to the sensor data provided by the sensor (52a-52d, 54a-54j).

28. The method of any of claims 23 to 27, wherein modifying operating parameters associated with the transmitter circuitry includes:
modifying sensor circuitry in response to the decoded control instructions to allocate bandwidth between two or more sensors (52a-52d, 54a-54j).

29. The method of any of claims 23 to 28, wherein modifying operating parameters associated with the transmitter circuitry includes:
modifying sensor circuitry in response to the decoded control instructions to selectively turn off excitation to the sensor (52a-52d, 54a-54j).

30. The method of any of claims 23 to 29, wherein modifying operating parameters associated with the transmitter circuitry includes:
modifying sensor circuitry in response to the decoded control instructions to selectively provide delta-R calibration to sensor data provided by the sensor (52a-52d, 54a-54j).

31. The method of any of claims 23 to 30, wherein modifying operating parameters associated with the transmitter circuitry includes:
modifying sensor circuitry in response to the decoded control instructions to select a filter frequency to be applied to the sensor data provided by the sensor (52a-52d, 54a-54j).

32. The method of any of claims 23 to 31, wherein modifying operating parameters associated with the transmitter circuitry includes:
modifying sensor circuitry in response to the decoded control instructions to select a sample to be used by an analog-to-digital converter (82a, 82b, 96) for converting analog sensor data to a digital sensor data.

33. The method of any of claims 23 to 32, wherein receiving sensor data provided by a sensor (52a-52d, 54a-54j) includes:
receiving high-bandwidth data from a plurality of high-bandwidth sensors (52a-52d); and
receiving direct current (DC) coupled low-bandwidth data from a plurality of low-bandwidth sensors (54a-54j).

34. The method of any of claims 23 to 33, wherein embedding the received sensor data onto a radio frequency carrier signal includes:
modulating the radio frequency carrier signal with the received sensor data using offset quadrature phase shift keying digital modulation.

35. The method of any of claims 23 to 34, further including:
embedding the command instructions into the AC power signal at a location external to the transmitter module (50a-50N); and
transmitting the AC power signal to each of a plurality of transmitter modules (50a-50N) employed in the multi-transmitter telemetry system (10).

36. The method of any of claims 23 to 35, further including:
receiving at a location external to the transmitter module (50a-50N) a plurality of radio frequency carrier signals, wherein each of the radio frequency carrier signals is provided at a unique frequency by one of a plurality of transmitter modules (50a-50N) employed in the multi-transmitter telemetry system (10).
